# FASCICULE DE BREVET EUROPEEN

(11) **EP 3 390 900 B1**
(45) Date de publication et mention de la délivrance du brevet: **24.04.2024**
(21) Numéro de dépôt: 16819525.3
(22) Date de dépôt: 19.12.2016
(51) Int. Cl.: B60Q 1/30, F21S 43/14, F21S 43/20, F21S 43/27

(54) **MODULE LUMINEUX, NOTAMMENT POUR FEU STOP DE VÉHICULE**
LICHTEINHEIT, INSBESONDERE FÜR KFZ-BREMSLICHT
LIGHT MODULE, IN PARTICULAR FOR VEHICLE STOP LIGHT

(30) Priorité: 18.12.2015 FR 1562864
(43) Date de publication de la demande: 24.10.2018
(73) Titulaire: Valeo Vision Belgique, 7822 Meslin l'Evêque (BE)
(72) Inventeur: FRANC, Alexandre, 7822 Meslin l'Evèque (FR); DEBERT, Florestan, 7822 Meslin l'Evèque (FR); LECLERCQ, Sébastien, 7822 Meslin l'Evèque (FR); SACCHET, Dirkie, 7822 Meslin l'Evèque (BE)
(74) Mandataire: Valeo Visibility
(86) Numéro de dépôt international: PCT/EP2016/081738
(87) Numéro de publication internationale: WO 2017/103267

(56) Documents cités:
- EP-A1- 2 317 214
- EP-A1- 2 587 120
- EP-A2- 1 022 188
- WO-A1-2006/072885
- DE-A1-102007 019 688
- FR-A1- 2 794 218
- GB-A- 456 520
- US-A- 5 582 480
- US-A1- 2007 183 168
- US-A1- 2008 037 116
- US-A1- 2014 218 939

## Description

L'invention a trait au domaine de l'éclairage et de la signalisation lumineuse, notamment pour véhicule automobile. Plus particulièrement, l'invention a trait à un module lumineux destiné à être disposé dans un boîtier de dispositif de signalisation lumineuse, tel qu'un feu arrière de véhicule automobile. Plus particulièrement encore, l'invention a trait à un module lumineux pour un feu stop surélevé notamment destiné à être disposé derrière une vitre de lunette arrière de véhicule automobile.

Le document de brevet publié FR 2 614 969 A1 divulgue un feu de signalisation avec une plage éclairante étendue, comme par exemple un feu stop pour lunette arrière de véhicule automobile, couramment appelé troisième feu stop. Il comprend une source lumineuse du type ampoule à incandescence, un premier élément optique transparent et galbé, entourant la source lumineuse et un deuxième élément optique transparent et généralement plan. Le premier élément optique comprend une face d'entrée, apte à recevoir les rayons de la source lumineuse, et une face de sortie présentant des facettes ou échelons de Fresnel aptes à répartir de manière homogène la lumière de la source lumineuse le long du deuxième élément optique. Ce dernier est généralement plan et comprend une face arrière d'entrée, également avec des échelons de Fresnel configurés pour dévier les rayons lumineux incidents suivant l'axe optique du feu de signalisation. Le deuxième élément optique est en fait un collimateur. Le feu de signalisation de cet enseignement est intéressant en ce qu'il tente, avec des moyens simples, de répartir de manière homogène la lumière suivant la direction principale du feu qui est transversale à l'axe optique. La collimation des rayons dans la direction verticale est assurée par des stries s'étendant généralement horizontalement sur les faces d'entrée des premier et/ou deuxième éléments optiques. Or ces stries sont le siège de pertes lumineuses ainsi que d'inhomogénéités dans le faisceau lumineux.

Le document de brevet publié FR 2 794 218 A1 divulgue un feu de signalisation, également avec plage éclairante étendue, du type feu stop pour lunette arrière de véhicule automobile. Le feu comprend une source lumineuse du type ampoule à incandescence, un collimateur et une lentille plan-convexe apte à faire converger les rayons lumineux parallèles sortant du collimateur vers un segment focal. Pour ce faire, la face avant de la lentille, généralement convexe, présente une série de godrons ou surfaces courbes s'étendant verticalement. Ces surfaces permettent de faire converger les rayons le long d'un segment focal qui est généralement perpendiculaire à la direction de godrons, et donc généralement horizontal. Le segment focal est situé au niveau de la face intérieure de la vitre sur laquelle le feu est destiné à être monté. La zone de la vitre recevant le feu peut par conséquent être opacifiée, à l'exception toutefois d'une fente correspondant au segment focal. L'intérieur du feu peut ainsi être caché depuis l'extérieur du véhicule par la paroi ou couche opacifiante disposée sur la vitre. De plus, le feu est rendu quasi invisible, lorsqu'il est éteint, depuis l'extérieur du véhicule. Ce design, bien qu'avantageux, présente toutefois quelques inconvénients, comme notamment le fait qu'il impose la présence d'une paroi ou couche opacifiante et que, par conséquent, la surface éclairée est impérativement mince.

L'invention a pour objectif de pallier au moins un inconvénient de l'état de la technique, notamment de l'état de la technique susmentionné. Plus particulièrement, l'invention a pour objectif de proposer un dispositif lumineux tel qu'un feu de signalisation stop surélevé qui présente un rendement optique satisfaisant, produit un faisceau d'une homogénéité satisfaisante et confère davantage de liberté par rapport à son aspect éteint et allumé lorsqu'il est disposé derrière une vitre ou une glace transparente ou translucide, le cas échéant colorée.

A cet égard, l'invention a pour objet un module lumineux tel que défini dans la revendication 1, destiné à être disposé derrière une vitre ou une glace transparente ou translucide, notamment une vitre de lunette arrière de véhicule automobile, ledit module comprenant : un emplacement pour au moins une source lumineuse apte à émettre des rayons lumineux ; un système optique apte à dévier les rayons lumineux émis par la ou les sources lumineuses de manière à former un faisceau lumineux suivant un axe optique du module, ledit système optique s'étendant suivant une direction principale transversale à l'axe optique et comprenant une face de sortie de rayons ; remarquable en ce que la face de sortie du système optique présente en section sagittale un profil général courbe convexe ou concave.

Selon un mode avantageux de l'invention, la face de sortie du système optique est libre de motifs optiques.

Selon un mode avantageux de l'invention, la face de sortie du système optique est lisse.

Selon un mode avantageux de l'invention, la face de sortie du système optique est grainée et préférentiellement présente une rugosité Rₐ inférieure à 20 micromètres.

Selon un mode avantageux de l'invention, la face de sortie du système optique comporte des zones lisses et des zones grainées

Selon un mode avantageux de l'invention, le profil courbe de la face de sortie du système optique est dans un plan parallèle à l'axe optique et à la direction principale dudit système et/ou dans un plan parallèle à l'axe optique et perpendiculaire à ladite direction principale.

Selon l'invention, le système optique comprend un premier élément optique transparent ou translucide avec une face d'entrée apte à recevoir, préférentiellement directement, les rayons émis par la ou les sources lumineuses, ladite face d'entrée comprenant des échelons de Fresnel.

Selon l'invention, les échelons de Fresnel sur la face d'entrée du premier élément optique présentent des profils courbes et/ou annulaires, ledit élément optique comprenant une face de sortie avec des échelons de Fresnel rectilignes.

Selon un mode avantageux de l'invention, les échelons de Fresnel sur la face de sortie du premier élément optique sont perpendiculaires à la direction principale du système optique.

Selon un mode avantageux de l'invention, le système optique comprend un deuxième élément optique transparent ou translucide avec une face d'entrée apte à recevoir les rayons provenant du premier élément optique, et une face de sortie formant la face de sortie du système optique.

Selon un mode avantageux de l'invention, la face d'entrée du deuxième élément optique comprend des échelons de Fresnel rectilignes.

Selon un mode avantageux de l'invention, les échelons de Fresnel sur la face d'entrée du deuxième élément optique sont perpendiculaires à la direction principale du système optique.

Selon un mode avantageux de l'invention, le deuxième élément optique comprend deux sous-éléments séparés par une lame d'air, le premier sous-élément portant la face d'entrée et le second sous-élément portant la face de sortie formant la face de sortie du système optique..

L'invention a également pour objet un dispositif lumineux de véhicule automobile, comprenant un boîtier et un module lumineux, remarquable en ce que le module lumineux est conforme à l'invention.

Les mesures de l'invention sont intéressantes en ce qu'elles permettent de produire un faisceau lumineux de signalisation généralement mince et étalé horizontalement, comme notamment pour un troisième feu stop ou feu stop surélevé, qui est dépourvu de moirages ou autres inhomogénéités. De plus, la forme convexe ou concave de la face de sortie du module lui permet d'être généralement lisse et, partant, d'avoir un aspect éteint uniforme et discret. Plus particulièrement, par rapport au feu lumineux du document FR 2 614 969 A1 susmentionné dans la partie relative à l'art antérieur, le fait d'avoir une face de sortie concave ou convexe permet d'assurer une dispersion et une homogénéité accrue du faisceau de signalisation. La concavité ou convexité de la face de sortie participe à la déviation selon la verticale des rayons et permet ainsi de s'acquitter d'échelons de Fresnel. Ces échelons provoquent des pertes lumineuses et sont des sources d'inhomogénéités. Par rapport au feu lumineux du document FR 2 794 218 A1 également susmentionné dans la partie relative à l'art antérieur, le fait d'avoir une face de sortie concave ou convexe permet d'éviter la formation de moirage due aux godrons. De plus, l'absence de godrons ou de coussinets sur la face de sortie lui procure un aspect éteint uniforme et discret, ce qui procure davantage de liberté de dimensionnement, notamment en ce qui concerne la hauteur du dispositif lumineux et aussi son positionnement par rapport à la vitre de lunette arrière. En effet, dans l'enseignement de FR 2 794 218 A1, le module est à distance de la vitre et celle-ci présente une couche opacifiante avec une fente horizontale mince. Or selon l'invention, la glace ou la vitre est dépourvue d'une paroi opaque.

D'autres caractéristiques et avantages de la présente invention seront mieux compris à l'aide de la description et des dessins parmi lesquels :
- La figure 1 est vue arrière d'un véhicule automobile équipé d'un feu stop surélevé conforme à l'invention ;
- La figure 2 est une vue en coupe II-II du feu de la figure 1, conformément à l'invention ;
- La figure 3 est une vue en coupe III-III du feu de la figure 1, conformément à l'invention.

Dans la description qui va suivre, les notions de verticalité et d'horizontalités sont exprimées lorsque le dispositif lumineux est orienté selon une position de montage sur le véhicule. L'orientation du dispositif lumineux est par ailleurs clairement définie aux différentes figures.

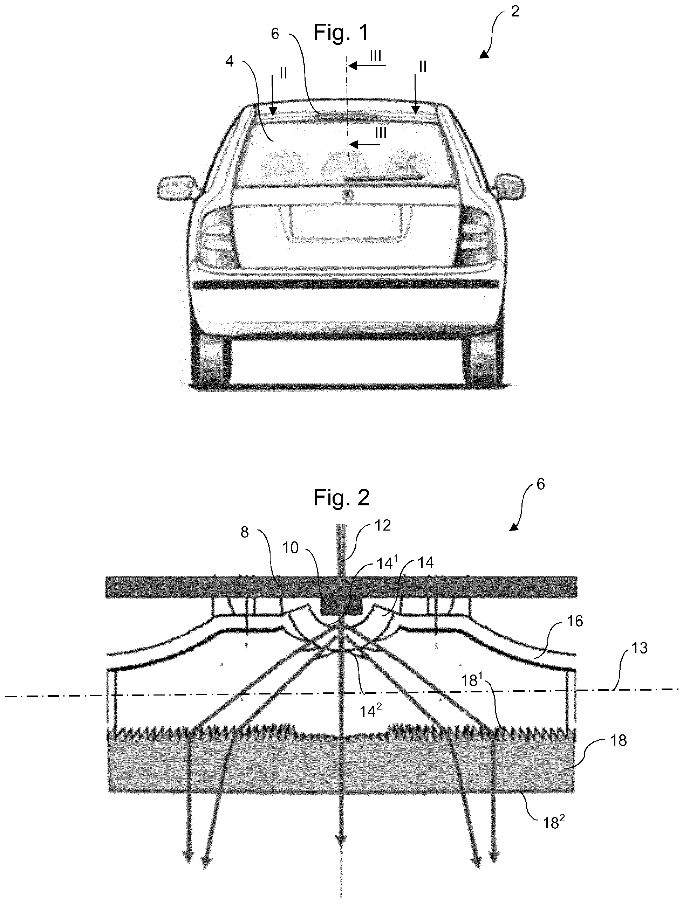

La figure 1 est une vue de l'arrière d'un véhicule automobile 2. De manière classique et connue, le véhicule comprend une lunette arrière 4, cette dernière pouvant être fixe sur la carrosserie ou être sur un ouvrant arrière tel qu'un hayon arrière. Le véhicule 2 comprend un feu de signalisation 6, disposé en haut de la lunette arrière 4, plus précisément derrière ladite lunette. Il s'agit en l'occurrence d'un feu stop, couramment appelé « troisième feu stop », ou feu stop surélevé, en référence aux deux feux stop classiques disposés plus bas à gauche et à droite. Le « troisième feu stop » ou feu stop surélevé est également désigné CHMSL, acronyme de l'expression anglo-saxonne « Center High-Mounted Stop Light ». Un tel feu stop surélevé peut également être installé en bas de la lunette arrière, sur la plage arrière ou monté dans la carrosserie, au-dessus de la lunette arrière ou encore au sommet de la malle de coffre. Lorsqu'il est destiné à être placé derrière la lunette arrière, le feu stop surélevé comporte un boitier dont l'ouverture est fermée par la lunette arrière, tandis que dans le cas où il est intégré dans la carrosserie, il comporte un boitier fermé par une glace transparente ou translucide, le cas échéant colorée en rouge. Selon l'invention, cette glace est dépourvue d'une paroi opaque.

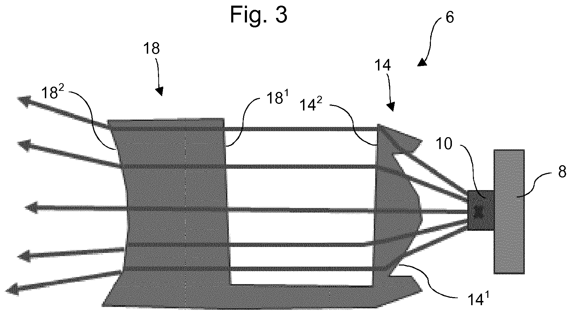

La figure 2 est une vue partielle en coupe transversale, c'est à dire longitudinale (par rapport au véhicule) et horizontale selon II-II du dispositif lumineux, ou feu, 6 de la figure 1. La figure 3 est une vue en coupe sagittale, c'est-à-dire longitudinale (par rapport au véhicule) et verticale selon III-III du feu 6 de la figure 1.

Le feu de signalisation 6 s'étend suivant une direction principale 13 qui correspond à l'horizontale lorsqu'il est en position de montage sur le véhicule. Cette direction principale 13 correspond également à l'horizontale sur la figure 2. Le feu comprend un support 8 d'une ou plusieurs sources lumineuses 10. Il peut s'agir de source(s) lumineuse(s) du type diode à électroluminescence (LED) ou encore du type à incandescence. Dans le cas de source(s) lumineuse(s) du type LED, le support 8 peut être une platine du type circuit imprimé ou PCB (acronyme de « Printed Circuit Board »). Dans le cas où plusieurs sources lumineuses sont présentes, celles-ci peuvent être disposées côte-à-côte ou encore réparties selon la direction principale du feu. La ou les sources lumineuses sont configurées pour éclairer dans une direction principale parallèle à l'axe optique 12 du feu de signalisation 6.

Le feu de signalisation 6 comprend également un système optique constitué, essentiellement, d'un premier élément optique 14 et d'un deuxième élément optique 18. Le premier élément optique est constitué d'un matériau transparent ou translucide, similairement à une lentille, avec une face d'entrée 14¹ et une face de sortie 14². En l'occurrence, le premier élément optique 14 est généralement courbe sur un secteur compris entre 90° et 180°, de manière à collecter une majeure partie de la lumière émise par la source lumineuse 10. La face d'entrée 14¹ comprend, comme cela est visible à la figure 3, des échelons dits de Fresnel configurés pour dévier essentiellement verticalement les rayons provenant de la ou des sources lumineuses. La face de sortie 14² comprend des stries ou échelons dits de Fresnel, comme cela est visible à la figure 2, de manière à contrôler l'étalement horizontal des rayons lumineux. Un cache 16 peut être prévu autour du premier élément optique 14.

Le deuxième élément optique 18 est disposé de manière à recevoir les rayons lumineux déviés par le premier élément optique 14. Tout comme le premier élément optique, le deuxième élément optique 18 est constitué d'un matériau transparent ou translucide, similairement à une lentille, avec une face d'entrée 18¹ et une face de sortie 18². Le deuxième élément optique est avantageusement généralement plan, s'étendant dans la direction principale du feu lumineux 6. La face d'entrée 18¹ comprend des stries ou échelons dits de Fresnel de manière à pouvoir dévier essentiellement horizontalement les rayons provenant du premier élément optique 14. Ces stries ou échelons s'étendent par conséquent essentiellement verticalement. Ils peuvent toutefois présenter une certaine courbure centrée sur l'axe optique 12.

Selon une variante non représentée, le deuxième élément optique 18 comprend deux sous-éléments séparés par une lame d'air, le premier sous-élément portant la face d'entrée 18¹ et le second sous-élément portant la face de sortie 18² formant la face de sortie du système optique 14, 18. Cela permet avantageusement d'améliorer l'esthétique du module lorsqu'il est éteint, en ce que les motifs de Fresnel portés par la face d'entrée 18¹ sont moins facilement visibles au travers de la face de sortie18² et au-travers de la vitre ou la glace transparente.

La face de sortie 18² du deuxième élément optique 18 est généralement concave. Plus précisément, le profil de sa section suivant un plan sagittal ou longitudinal vertical (figure 3) est généralement courbe et concave. Le profil vertical en question présente une simple concavité. Il peut correspondre à un arc de cercle ou une fonction plus complexe. Son rayon moyen peut être compris entre 10 et 50 mm. La forme de ce profil s'étend avantageusement sur plus de 50%, préférentiellement sur plus de 80% de la longueur de la face de sortie 18² en question. Il est toutefois entendu que le profil en question peut évoluer le long de l'axe principal du feu lumineux. La section de la face de sortie 18² suivant un plan transversal ou longitudinal horizontal (c'est-à-dire suivant la coupe II-II de la figure 1) peut présenter également un profil courbe et concave. Dans ce cas, ce profil horizontal présente alors également une simple concavité avec un rayon de courbure moyen supérieur à celui du profil vertical. Ce rayon peut être compris entre 7 et 12 mètres.

Comme cela est visible à la figure 3, les rayons sortant du premier élément optique 14 et entrant dans le deuxième élément optique 18 sont essentiellement dans des plans horizontaux. Ils se propagent ainsi essentiellement dans des plans horizontaux dans l'épaisseur du matériau transparent ou translucide du deuxième élément optique 18. La face de sortie concave 18² a pour effet de disperser les rayons verticalement et ainsi d'assurer une diffusion des rayons lumineux. Cet effet est particulièrement intéressant lorsque le feu lumineux présente une hauteur (suivant la verticale) réduite.

En référence à la discussion ci-avant selon laquelle le profil horizontal de la face de sortie peut également être concave, un tel profil concave a un effet similaire à celui du profil vertical, à savoir d'étaler les rayons lumineux horizontalement.

Alternativement à ce qui vient d'être décrit, le profil sagittal ou vertical de la face de sortie du deuxième élément optique peut être convexe. Dans ce cas, l'effet sera de faire converger les rayons vers une zone à l'avant et proche du feu de signalisation. Les rayons vont alors diverger verticalement, similairement au feu de signalisation à profil concave. Le profil convexe peut correspondre à un arc de cercle ou une fonction plus complexe. Son rayon moyen peut être compris entre 10 et 50mm. La forme convexe du profil vertical s'étend avantageusement sur plus de 50%, préférentiellement sur plus de 80% de la longueur de la face de sortie en question. Il est toutefois entendu que le profil en question peut évoluer le long de l'axe principal du feu lumineux. La section de face de sortie suivant un plan transversal ou longitudinal horizontal (c'est-à-dire suivant la coupe II-II de la figure 1) peut également présenter un profil courbe et convexe. Dans ce cas, ce profil horizontal présente alors également une simple convexité avec un rayon de courbure moyen supérieur à celui du profil vertical. Ce rayon peut être compris entre 7 et 12 mètres.

De manière générale, la face de sortie 18² du deuxième élément optique 18 peut être grainée sur toute sa surface ou sur certaines zones seulement, par exemple avec une rugosité Rₐ inférieure à 20 micromètres, de préférence inferieure à 10 micromètres et supérieure à 3 micromètres. Ce grainage fin permet d'assurer une fonction de diffusion des rayons, permettant d'éviter ou de réduire d'éventuels moirages ou inhomogénéités.

Selon une caractéristique préférée de l'invention, le système optique est une pièce unique en matière polymère synthétique : le premier élément optique et le deuxième élément optique, le cas échéant les deux sous-éléments du deuxième élément optique sont venus de matière. Ils ont reliés par une base. Le système optique est réalisé par moulage par injection de matière polymère synthétique. De préférence, la matière est du polycarbonate (PC) ou du polyméthacrylate de méthyle (PMMA).

Si l'invention trouve une application particulièrement préférée pour la réalisation de feu stop surélevé pour véhicule automobile, qu'ils soient du type placé dans un boitier derrière la lunette arrière du véhicule ou du type boitier fermé par une glace transparente ou translucide et intégré dans la carrosserie à l'extérieur du véhicule, le module lumineux peut également être utilisé pour réaliser des dispositifs d'éclairage intérieur comportant un boitier fermé par une glace transparente ou translucide.

## Revendications

1. Module lumineux (6) pour véhicule automobile, destiné à être disposé derrière une vitre ou une glace transparente ou translucide, notamment une vitre de lunette arrière de véhicule automobile, ledit module comprenant :
- un emplacement pour au moins une source lumineuse (10) apte à émettre des rayons lumineux ;
- un système optique (14, 18) apte à dévier les rayons lumineux émis par la ou les sources lumineuses (10) de manière à former un faisceau lumineux suivant un axe optique (12) du module, ledit système optique s'étendant suivant une direction principale (13) transversale à l'axe optique (12) et comprenant une face de sortie (18²) de rayons ;
**caractérisé en ce que**
la face de sortie (18²) du système optique (14, 18) présente en section sagittale un profil général courbe convexe ou concave et **en ce que** le système optique comprend un premier élément optique (14) transparent ou translucide avec une face d'entrée (14¹) apte à recevoir, préférentiellement directement, les rayons émis par la ou les sources lumineuses (10), ladite face d'entrée (14¹) comprenant des échelons de Fresnel, les échelons de Fresnel sur la face d'entrée (14¹) du premier élément optique (14) présentent des profils courbes et/ou annulaire, ledit premier élément optique (14) comprenant une face de sortie (14²) avec des échelons de Fresnel rectilignes.

2. Module (6) selon la revendication 1, **caractérisé en ce que** la face de sortie (18²) du système optique (14, 18) est libre de motifs optiques.

3. Module (6) selon la revendication 2, **caractérisé en ce que** la face de sortie (18²) du système optique (14, 18) est lisse.

4. Module (6) selon la revendication 2, **caractérisé en ce que** la face de sortie (18²) du système optique (14, 18) est grainée et préférentiellement présente une rugosité Rₐ inférieure à 20 micromètres.

5. Module (6) selon l'une des revendications 1 à 4, **caractérisé en ce que** la face de sortie (18²) du système optique comporte des zones lisses et des zones grainées.

6. Module (6) selon l'une des revendications 1 à 5, **caractérisé en ce que** les échelons de Fresnel sur la face de sortie (14²) du premier élément optique (14) sont perpendiculaires à la direction principale du système optique.

7. Module (6 selon l'une des revendications 1 à 6, **caractérisé en ce que** le système optique comprend un deuxième élément optique (18) transparent ou translucide avec une face d'entrée (18¹) apte à recevoir les rayons provenant du premier élément optique (14), et une face de sortie (18²) formant la face de sortie du système optique (14, 18).

8. Module (6) selon la revendication 7, **caractérisé en ce que** la face d'entrée (18¹) du deuxième élément optique (18) comprend des échelons de Fresnel rectilignes.

9. Module (6) selon les revendications 3 et 8, **caractérisé en ce que** les échelons de Fresnel sur la face d'entrée (18¹) du deuxième élément optique (18) sont perpendiculaires à la direction principale (13) du système optique (14, 18).

10. Module (6) selon l'une des revendications 7 à 9, **caractérisé en ce que** le deuxième élément optique (18) comprend deux sous-éléments séparés par une lame d'air, le premier sous-élément portant la face d'entrée (18¹) et le second sous-élément portant la face de sortie (18²) formant la face de sortie du système optique (14, 18).

11. Dispositif lumineux de véhicule automobile (2), comprenant un boîtier et un module lumineux, **caractérisé en ce que** le module lumineux est conforme à l'une des revendications 1 à 10.

## Patentansprüche

1. Leuchtmodul (6) für ein Kraftfahrzeug, das dazu bestimmt ist, hinter einer Glasscheibe oder einer transparenten oder transluzenten Scheibe, insbesondere einer Heckscheibe eines Kraftfahrzeugs, angeordnet zu werden, wobei das Modul umfasst:
- einen Platz für mindestens eine Lichtquelle (10), die geeignet ist, Lichtstrahlen zu emittieren;
- ein optisches System (14, 18), das geeignet ist, die von der oder den Lichtquellen (10) emittierten Lichtstrahlen so umzulenken, dass ein Lichtbündel entlang einer optischen Achse (12) des Moduls gebildet wird, wobei sich das optische System entlang einer Hauptrichtung (13) erstreckt, die quer zu der optischen Achse (12) verläuft, und eine Austrittsfläche (18²) für Strahlen umfasst;
**dadurch gekennzeichnet, dass**
die Austrittsfläche (18²) des optischen Systems (14, 18) im Sagittalschnitt ein konvexes oder konkaves gekrümmtes allgemeines Profil aufweist, und dadurch, dass das optische System ein erstes transparentes oder transluzentes optisches Element (14) umfasst mit einer Eintrittsseite (14¹), die geeignet ist, die von der oder den Lichtquellen (10) emittierten Strahlen, bevorzugt direkt, zu empfangen, wobei die Eintrittsseite (14¹) Fresnel-Stufen umfasst, wobei die Fresnel-Stufen auf der Eintrittsseite (14¹) des ersten optischen Elements (14) gekrümmte und/oder ringförmige Profile aufweisen, wobei das erste optische Element (14) eine Austrittsseite (14²) mit geraden Fresnel-Stufen umfasst.

2. Modul (6) nach Anspruch 1, **dadurch gekennzeichnet, dass** die Austrittsseite (18²) des optischen Systeme (14, 18) frei von optischen Mustern ist.

3. Modul (6) nach Anspruch 2, **dadurch gekennzeichnet, dass** die Austrittsseite (18²) des optischen Systeme (14, 18) glatt ist.

4. Modul (6) nach Anspruch 2, **dadurch gekennzeichnet, dass** die Austrittsseite (18²) des optischen Systems (14, 18) gekörnt ist und bevorzugt eine Rauheit Rₐ von weniger als 20 Mikrometer aufweist.

5. Modul (6) nach einem der Ansprüche 1 bis 4, **dadurch gekennzeichnet, dass** die Austrittsseite (18²) des optischen Systems glatte Bereiche und gekörnte Bereiche beinhaltet.

6. Modul (6) nach einem der Ansprüche 1 bis 5, **dadurch gekennzeichnet, dass** die Fresnel-Stufen auf der Austrittsseite (14²) des ersten optischen Elements (14) senkrecht zu der Hauptrichtung des optischen Systems verlaufen.

7. Modul (6) nach einem der Ansprüche 1 bis 6, **dadurch gekennzeichnet, dass** das optische System ein zweites transparentes oder transluzentes optisches Element (18) umfasst mit einer Eintrittsseite (18¹), die geeignet ist, die von dem ersten optischen Element (14) kommenden Strahlen zu empfangen, und einer Austrittsseite (18²), welche die Austrittsseite des optischen Systems (14, 18) bildet.

8. Modul (6) nach Anspruch 7, **dadurch gekennzeichnet, dass** die Eintrittsseite (18¹) des zweiten optischen Elements (18) gerade Fresnel-Stufen umfasst.

9. Modul (6) nach einem der Ansprüche 3 und 8, **dadurch gekennzeichnet, dass** die Fresnel-Stufen auf der Eintrittsseite (18¹) des zweiten optischen Elements (18) senkrecht zu der Hauptrichtung (13) des optischen Systems (14, 18) verlaufen.

10. Modul (6) nach einem der Ansprüche 7 bis 9, **dadurch gekennzeichnet, dass** das zweite optische Element (18) zwei durch einen Luftspalt getrennte Teilelemente umfasst, wobei das erste Teilelement die Eintrittsseite (18¹) trägt und wobei das zweite Teilelement die Austrittsseite (18²) trägt, welche die Austrittsseite des optischen Systems (14, 18) bildet.

11. Leuchtvorrichtung für ein Kraftfahrzeug (2), umfassend ein Gehäuse und ein Leuchtmodul, **dadurch gekennzeichnet, dass** das Leuchtmodul einem der Ansprüche 1 bis 10 entspricht.

## Claims

1. A lighting module (6) for a motor vehicle, intended to be placed behind a translucent or transparent outer lens or window, in particular a rear windshield of a motor vehicle, said module comprising:
- a place for at least one light source (10) that is able to emit light rays; and
- an optical system (14, 18) that is able to deviate the light rays emitted by the one or more light sources (10) so as to form a light beam along an optical axis (12) of the module, said optical system extending in a main direction (13) that is transverse to the optical axis (12) and comprising an exit face (18²) for rays;
**characterized in that**
the exit face (18²) of the optical system (14, 18) has in sagittal cross section a concave or convex curved general profile, and **in that** the optical system comprises a translucent or transparent first optical element (14) with an entrance face (14¹) that is able to receive, preferably directly, the rays emitted by the one or more light sources (10), said entrance face (14¹) comprising Fresnel echelons, the Fresnel echelons on the entrance face (14¹) of the first optical element (14) have annular and/or curved profiles, said first optical element (14) comprising an exit face (14²) with rectilinear Fresnel echelons.

2. The module (6) as claimed in claim 1, **characterized in that** the exit face (18²) of the optical system (14, 18) is free of optical patterns.

3. The module (6) as claimed in claim 2, **characterized in that** the exit face (18²) of the optical system (14, 18) is smooth.

4. The module (6) as claimed in claim 2, **characterized in that** the exit face (18²) of the optical system (14, 18) is grained and preferably has a roughness Rₐ lower than 20 micrometers.

5. The module (6) as claimed in one of claims 1 to 4, **characterized in that** the exit face (18²) of the optical system includes smooth zones and grained zones.

6. The module (6) as claimed in one of claims 1 to 5, **characterized in that** the Fresnel echelons on the exit face (14²) of the first optical element (14) are perpendicular to the main direction of the optical system.

7. The module (6) as claimed in one of claims 1 to 6, **characterized in that** the optical system comprises a translucent or transparent second optical element (18) with an entrance face (18¹) that is able to receive the rays originating from the first optical element (14), and an exit face (18²) forming the exit face of the optical system (14, 18).

8. The module (6) as claimed in claim 7, **characterized in that** the entrance face (18¹) of the second optical element (18) comprises rectilinear Fresnel echelons.

9. The module (6) as claimed in claims 3 and 8, **characterized in that** the Fresnel echelons on the entrance face (18¹) of the second optical element (18) are perpendicular to the main direction (13) of the optical system (14, 18).

10. The module (6) as claimed in one of claims 7 to 9, **characterized in that** the second optical element (18) comprises two sub-elements that are separated by an air-filled cavity, the first sub-element bearing the entrance face (18¹) and the second sub-element bearing the exit face (18²) forming the exit face of the optical system (14, 18).

11. A lighting device for a motor vehicle (2), said device comprising a housing and a lighting module, **characterized in that** the lighting module is as claimed in one of claims 1 to 10.
